# EUROPEAN PATENT APPLICATION

(11) **EP 3 466 844 A1**
(43) Date of publication of application: **10.04.2019**
(21) Application number: 17194580.1
(22) Date of filing: 03.10.2017
(51) Int. Cl.: B65G 1/06

(54) **A SHUTTLE FOR DELIVERING AND RETRIEVING GOODS, A STORAGE SYSTEM WITH A SHUTTLE AND METHODS ASSOCIATED THEREWITH**

(71) Applicant: AJ Produkter AB, 301 82 Halmstad (SE)
(72) Inventor: Rydsjö, Oscar, 302 94 Halmstad (SE)
(74) Representative: Hansson Thyresson AB

(57) **Abstract**

A shuttle (16) for delivering and retrieving goods (11) to and from a storage position in a rack storage system (10). The shuttle (16) comprises a chassis (19), a motor, wheels (20), a vertically displaceable goods support platform (21), and a mechanism for lifting and lowering the platform (21). The mechanism for lifting and lowering the platform (21) comprises a lift shaft with eccentric lift shaft portions (23, 24) for horizontally displacing arms (25, 26) connected to the lift shaft and thereby rotating lift tubes (29, 30) connected to the arms (25, 26) and arranged pivotably around wheel shafts (34, 35) of the shuttle (16) to also rotate lift elements (31) extending radially from the lift tubes (29, 30) for lifting and lowering the platform (21).

## Description

### FIELD OF INVENTION

The invention relates to a shuttle for delivering and retrieving goods. More specifically, the present invention relates to a shuttle for delivering and retrieving goods to and from a storage position in a storage system, such as a rack storage system. Such shuttles are commonly used in rack storage systems, such as pallet racking systems, for transporting goods, such as goods arranged on a pallet, between the storage position and a vehicle, such as a forklift, for further transport of the goods. The present invention is also related to a storage system comprising such a shuttle. The present invention is also related to a method for lifting or lowering a platform of a shuttle and also to a method for retrieving goods from a storage position in a rack storage system.

### STATE OF THE ART

Different types of shuttles for transporting goods on pallets to and from a storage position in pallet racking systems are known in the prior art. One such type of prior art shuttles comprises a chassis, a motor, a plurality of wheels, such as four wheels, and a vertically displaceable goods support platform, wherein the shuttle is autonomously movable on two parallel rails arranged in a horizontal plane below a row of storage positions. The platform of the shuttle is set in a raised position for transporting a pallet with goods to the desired storage position in the rack, where it can be lowered for positioning of the pallet on beams of the rack. Then, the shuttle is movable along the rails below the pallet in its lowered position. The lifting and lowering mechanism according to prior art shuttles comprises a motor driving a rotatable first lift shaft eccentrically connected to a second lift shaft for displacing wheel shafts of the shuttle in relation to the chassis.

Space in a storage system is valuable. Hence, there is always a need for improving space utilization of the storage system and of the shuttles thereof. One problem with such prior art shuttles is that they take up considerable space or that it is difficult to fit the desired components within the shuttle.

### SUMMARY

An object of the present invention is to provide a reliable shuttle which utilizes space in an efficient manner. The present invention relates to a shuttle for delivering and retrieving goods to and from a storage position in a rack storage system, wherein the shuttle comprises a chassis, a motor, wheels, at least one vertically displaceable goods support platform, and a mechanism for lifting and lowering the platform, wherein the mechanism for lifting and lowering the platform comprises a rotatable lift shaft with a first lift shaft portion connected to a motor for driving the first lift shaft portion, a second lift shaft portion connected to the first lift shaft portion and arranged eccentric thereto, and first and second arms pivotably connected to the second lift shaft portion and extending in opposite directions perpendicular to the second lift shaft portion, characterised in that the first arm is pivotably connected to a first connection element, which first connection element is rotationally fixed to a rotatable first lift tube and extends radially therefrom, wherein the first lift tube is arranged pivotably around a first wheel shaft, the second arm is pivotably connected to a second connection element, which second connection element is rotationally fixed to a rotatable second lift tube and extends radially therefrom, wherein the second lift tube is arranged pivotably around a second wheel shaft, and the first and second lift tubes are provided with radially extending lift elements, which lift elements are rotationally fixed to the lift tubes and are connected to the platform for lifting and lowering of the platform in relation to the chassis when the lift tubes are rotated. The shuttle according to the invention results in an efficient and reliable lifting and lowering operation. The structure of the lift mechanism including the lift tubes being rotatable around the wheel shafts results in a lifting and lowering of the platform while the positions of the wheel shafts remain unchanged, which results in a saving of space within the shuttle. Hence, the structure of the shuttle and its lifting mechanism results in possibilities for reduced height of the shuttle and/or increased space for batteries inside the shuttle.

The positions of the axes of rotation of the lift tubes and the positions of the axes of rotation of the wheels shafts can be fixed. Also, the axis of rotation of the first lift tube can be aligned with the axis of rotation of the first wheel shaft, and the axis of rotation of the second lift tube can be aligned with the axis of rotation of the second wheel shaft. Hence, by rotating the lift tubes around spatially fixed wheel shafts, a simple structure can be achieved which saves space and provides a lifting mechanism which can operate independently of the propelling mechanism of the shuttle.

The platform can be connected to the lift elements through platform engaging elements pivotably connected to the lift elements. Hence, a smooth and simple displacement of the platform in the vertical direction is achieved. The platform can be fixed to the platform engaging elements. At least one of the platform engaging elements, such as all of them, can be provided with a load cell, so that a predetermined load on the platform can be detected or the weight of the load on the platform can be measured.

The present invention also relates to a rack storage system having at least one pair of elongated rails arranged in parallel, and a shuttle as described above movable on said pair of rails. The rack storage system can comprise a plurality of racks with aisles between them, in which aisles forklifts can drive. The rails can be arranged perpendicular to the aisle. The rack storage system can be a deep rack storage, wherein the shuttle can transport goods or pallets with goods between a storage position in the rack along the rails and a front or a face of the rack, such as a front or a face towards the aisle, so that the goods or pallets with goods can be delivered or retrieved by the forklift.

The present invention also relates to a method for lifting or lowering at least one platform of a shuttle for delivering and retrieving goods to and from a storage position in a rack storage system, comprising the steps of
a) activating a motor of the shuttle for rotating a first lift shaft portion eccentrically connected to a second lift shaft portion of a lift shaft of the shuttle,
b) by rotation of the second lift shaft portion around the axis of rotation of the first lift shaft portion, pushing a first arm extending perpendicular from the second lift shaft portion and being pivotably connected to the second lift shaft portion while simultaneously pulling a second arm extending from the second lift shaft portion in a direction substantially opposite to the first arm and being pivotably connected to the second lift shaft portion,
c) by pushing the first arm, rotating a first lift tube around a first wheel shaft of the shuttle via a first connection element pivotably connected to the first arm and rotationally fixed to the first lift tube, and simultaneously, by pulling the second arm rotating a second lift tube around a second wheel shaft of the shuttle via a second connection element pivotably connected to the second arm and rotationally fixed to the second lift tube,
d) by rotating the first and second lift tubes, rotating lift elements being rotationally fixed to and radially extending from the lift tubes, and
e) by rotating the lift elements, lifting or lowering the at least one platform in relation to a chassis of the shuttle.

The present invention is also related to a method for retrieving goods from a storage position in a rack storage system comprising at least one row of storage positions, comprising the steps of
a) providing a shuttle on a pair of rails arranged below the row of storage positions,
b) driving the shuttle along the rails to a desired storage position, wherein said platform is in a lowered position below the goods to be retrieved,
c) activating a motor of the shuttle for rotating a first lift shaft portion eccentrically connected to a second lift shaft portion of a lift shaft of the shuttle,
d) by rotation of the second lift shaft portion around the axis of rotation of the first lift shaft portion, pushing a first arm extending perpendicular from the second lift shaft portion and being pivotably connected to the second lift shaft portion while simultaneously pulling a second arm extending from the second lift shaft portion in a direction substantially opposite to the first arm and being pivotably connected to the second lift shaft portion,
e) by pushing the first arm, rotating a first lift tube around a first wheel shaft of the shuttle via a first connection element pivotably connected to the first arm and rotationally fixed to the first lift tube, and simultaneously, by pulling the second arm rotating a second lift tube around a second wheel shaft of the shuttle via a second connection element pivotably connected to the second arm and rotationally fixed to the second lift tube,
f) by rotating the first and second lift tubes, rotating lift elements being rotationally fixed to and radially extending from the lift tubes,
g) by rotating the lift elements, lifting the at least one platform in relation to a chassis of the shuttle and thereby lifting the goods from the rack, and
h) driving the shuttle with its platform in a lifted position and the goods thereon along the rails to a forklift.

Further characteristics and advantages of the present invention will become apparent from the description of the embodiments below, the appended drawings and the dependent claims.

### BRIEF DESCRIPTION OF THE DRAWINGS

The invention will now be described in more detail with the aid of exemplary embodiments and with reference to the accompanying drawings, in which
- Fig. 1: is a schematic side view of a rack storage system according to one embodiment, wherein pallets with goods are arranged in storage positions and wherein a shuttle is illustrated on rails in lifted position for transporting goods,
- Fig. 2: is a schematic side view according to Fig. 1, wherein the shuttle is illustrated in a lowered position below a pallet in a storage position,
- Fig. 3: is a schematic side view of a part of a storage system according to one embodiment, including a forklift transporting a pallet with goods to or from a shuttle,
- Fig. 4: is a schematic perspective view of a shuttle according to one embodiment seen from above,
- Fig. 5: is a schematic perspective view of a shuttle according to one embodiment seen from below,
- Fig. 6: is a schematic perspective view of a part of the shuttle according to one embodiment, illustrating the wheels and a lifting mechanism of the shuttle,
- Fig. 7: is a schematic view from above of the wheels and lifting mechanism according to Fig. 6,
- Fig. 8: is a schematic section view along line C-C in Fig. 7, wherein support elements have been removed to illustrate two wheels and part of the lifting mechanism from the side according to one embodiment,
- Fig. 9: is a schematic section view along the line C-C in Fig. 7 of a part of the shuttle, illustrating a lift shaft having a first lift shaft portion and a second lift shaft portion, and parts of arms of the lifting mechanism according to one embodiment,
- Fig. 10: is a schematic side view of a part of the shuttle of the shuttle, illustrating a part of one of the arms, a connection element and a lifting tube of the lifting mechanism and a wheel of the shuttle according to one embodiment,
- Fig. 11: is a schematic side view of a part of the shuttle according to one embodiment, illustrating a goods support platform of the shuttle in a lifted position, and
- Fig. 12: is a schematic side view of a part of the shuttle according Fig. 11, illustrating the goods support platform of the shuttle in a lowered position.

### THE INVENTION

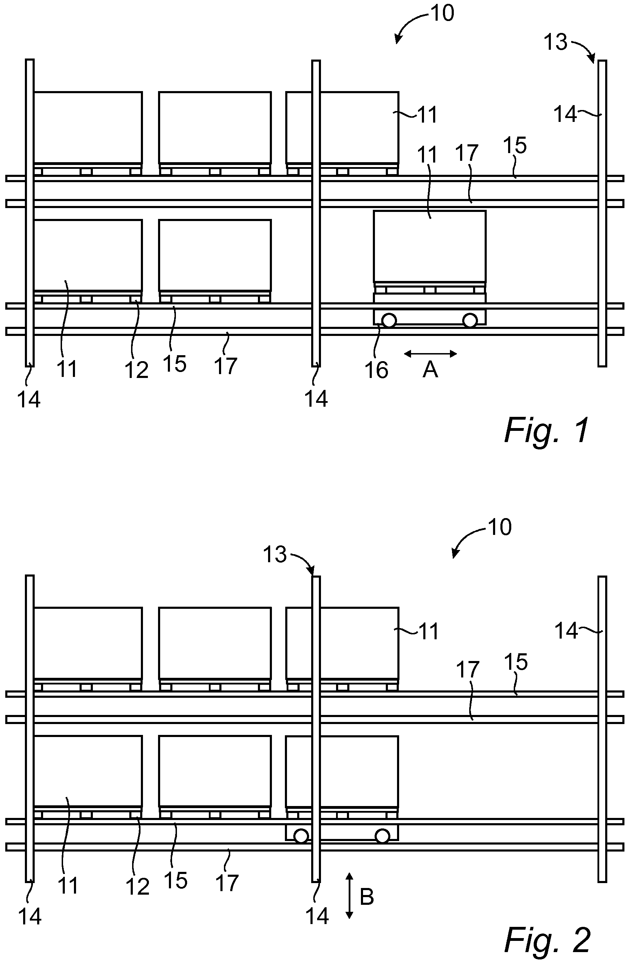

With reference to Fig. 1 a storage system 10 or a part thereof is illustrated schematically according to one embodiment. The storage system 10 is arranged for storing goods 11 in storage positions of the storage system 10. For example, the storage system 10 is arranged for storing goods 11 arranged on pallets 12. For example, the storage system 10 comprises a rack storage system, such as a pallet rack 13, including a plurality of columns 14 and a plurality of beams 15 connected to the columns 14 to form the rack 13, wherein the beams 15 extend horizontally between the columns 14, so that the pallets 12 can be positioned on top of the beams 15. The beams 15 can be connected to the columns 14 in a variety of different ways, such as by means of screws, hooks, brackets, welding or similar. For example, the storage system 10 comprises a plurality of storage positions arranged in vertically displaced and parallel rows. According to one embodiment, the storage system 10 comprises a plurality of racks 13 separated by aisles for a forklift. For example, the storage system 10 comprises a so called deep pallet racking, wherein a plurality of storage positions for pallets 12 are arranged in a row extending perpendicular from a front side of the rack 13, such as perpendicular to an aisle or similar forklift driving area.

The storage system 10 comprises at least one shuttle 16 for transporting the pallets 12 and any goods 11 arranged thereon to and from a desired storage position of the storage system 10. The shuttle 16 is arranged for transporting the pallet 12 between the front side of the rack 13 and the storage position, which is illustrated by means of the arrow A in Fig. 1. The shuttle 16 is movable on a pair of rails 17 of the storage system 10. The rails 17 are arranged below a row of storage positions and, e.g. below the beams 15 for carrying the pallets 12. For example, the rails 17 are arranged in parallel to the beams 15. Hence, the rails 17 extend perpendicular to a front side of the rack 13 and perpendicular to the aisle or similar if applicable. The shuttle 16 is movable along the rails 17 substantially between an end of the rails at the front side of the rack 13 and the innermost storage position. Alternatively, the shuttle 16 is movable along the rails 17 between opposite ends of the rails 17 and thus between two opposite faces of the rack 13.

The shuttle 16 is movable between a lifted position for transporting the pallet 12 along the rails 17 and along the beams 15 to and from the storage position, as illustrated in Fig. 1, and a lowered position for lowering the pallet 12 onto the beams 15 and for allowing the shuttle 16 to move below the pallet 12, as illustrated in Fig. 2. Hence, the shuttle 16 is movable substantially vertically between the lifted and lowered positions, which is illustrated by means of the arrow B in Fig. 2.

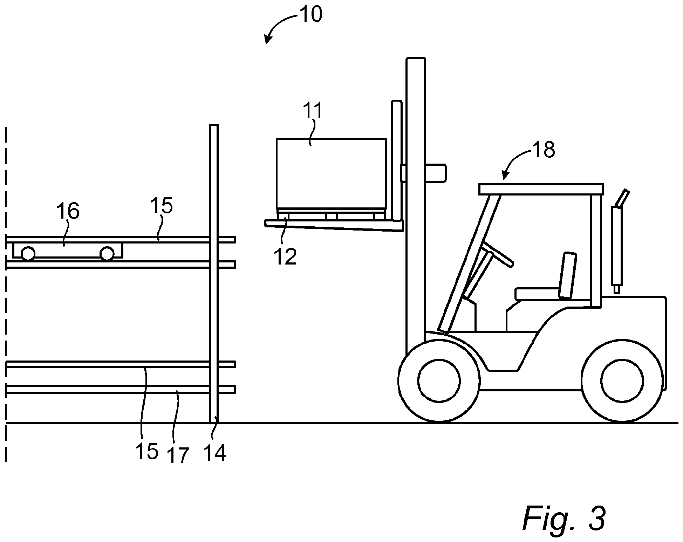

With reference to Fig. 3 the storage system 10 comprises a vehicle for transporting goods 11 to and from the rack 13. For example, the vehicle is a forklift 18 or similar vehicle for transporting the pallets 12 with the goods 11 arranged thereon. For example, the forklift 18 is also arranged for transporting the shuttle 16 between rows of storage positions and between different racks 13 of the storage system 10. For example, the forklift 18 is a conventional forklift suitable for transporting pallets 12. The shuttle 16 is arranged for transporting the pallet 12 with goods 11 from the storage position in the rack 13 to a front side or a face of the rack 13, so that the pallet 12 can be reached by the forklift 18 for further transport. Then, the forklift 18 is arranged for lifting the pallet 12 off the shuttle 16. For example, the forklift 18 is also arranged for lifting the shuttle 16 off the rails 17 for transporting the shuttle 16. Similarly, the shuttle 16 is arranged for receiving the pallet 12 with the goods 11 thereon from the forklift 18, wherein the shuttle 16 transports the pallet 12 with goods 11 from the front side or face of the rack 13 and along the rails 17, in the lifted position of the shuttle 16, to the storage position in the rack 13, in which storage position the pallet 12 is lowered onto the beams 15 of the rack 13 to put the pallet 12 down and to disengage the shuttle 16 from the pallet 12.

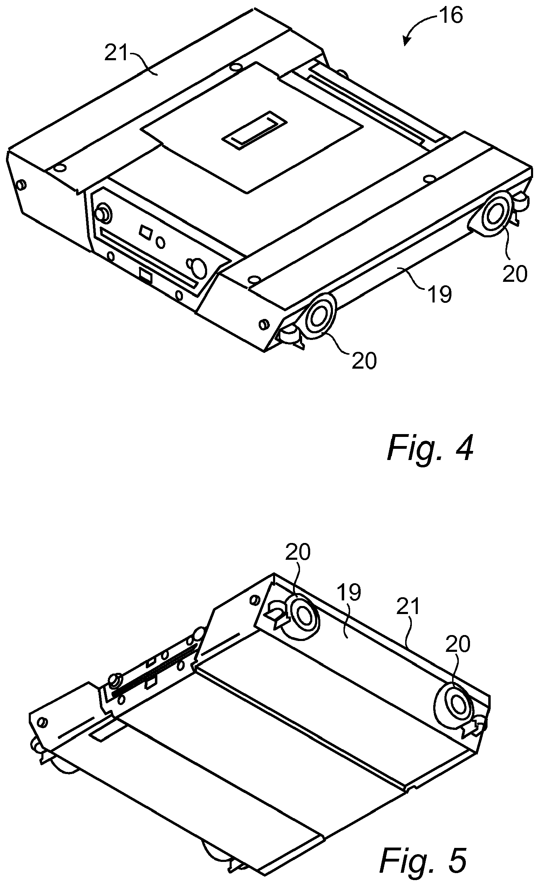

With reference to Figs. 4 and 5 the shuttle 16 is illustrated according to one embodiment. The shuttle 16 comprises a chassis 19, wheels 20 and one or more goods support platforms 21. In the illustrated embodiment, the shuttle 16 comprises four wheels 20, two on each of the sides of the shuttle 16, which sides extends in a direction of travel of the shuttle 16 and are to be arranged along the rails 17. For example, the shuttle 16 comprises one platform 21, which is lifted and lowered in its entirety. Alternatively, the shuttle 16 comprises two platforms 21, such as a left-hand platform and a right-hand platform extending in the direction of travel between a back and a front of the shuttle 16. The shuttle 16 also comprises a motor (not illustrated), such as an electric motor, for propelling the shuttle 16 by rotating one or more of the wheels 20. Said motor for propelling the shuttle 16 is, e.g., connected to a battery (not illustrated), which battery is arranged inside the chassis 19 below the platform 21.

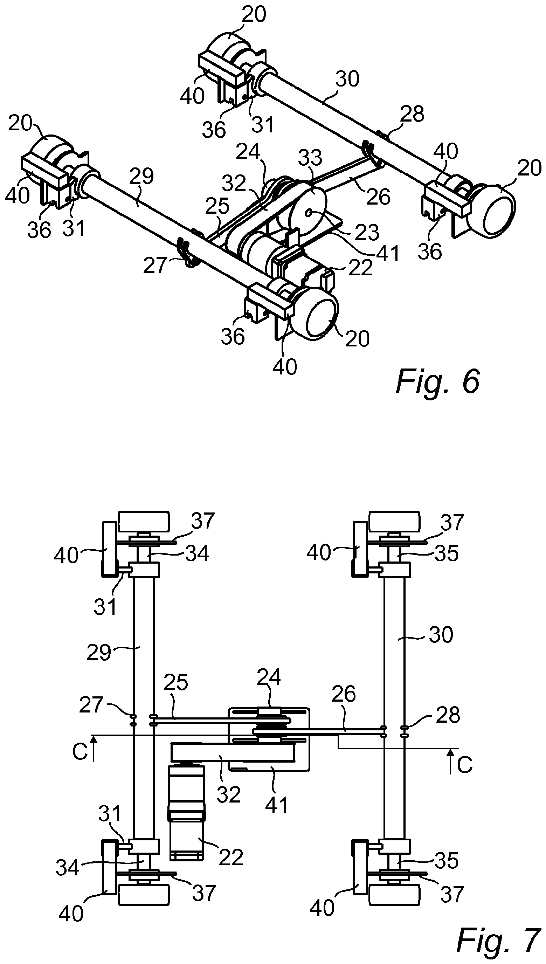

With reference to Figs. 6 and 7 the shuttle 16 comprises a lifting mechanism for lifting and lowering the platform 21. The lifting mechanism is arranged for displacing the platform 21 in relation to the wheels 20. The lifting mechanism comprises a motor 22 and a lift shaft having a first lift shaft portion 23 and a second lift shaft portion 24. The lifting mechanism further comprises a first arm 25, a second arm 26, a first connection element 27, a second connection element 28, a first lift tube 29, a second lift tube 30 and a plurality of lift elements 31 for displacing the platform 21 vertically by activation of the motor 22. For example, the motor 22 is an electric motor for driving the lift elements 31 through the lift shaft 23, 24, the arms 25, 26, the connection elements 28, 28 and the lift tubes 29, 30. For example, the first lift tube 29 is provided with a first lift element and a second lift element spaced apart from each other, and wherein the second lift tube 30 is provided with a third lift element and a fourth lift element spaced apart from each other. For example, the motor 22 is separate from the motor for propelling the shuttle 16. For example, the motor 22 is dedicated to lifting and lowering operation. Hence, the shuttle 16 comprises at least two electric motors. Alternatively, the motor 22 is arranged both for propelling the shuttle 16 and for lifting and lowering operations. The motor 22 is arranged for rotating the first lift shaft portion 23. In the illustrated embodiment, the motor 22 is connected to the first lift shaft portion 23 through a continuous flexible loop drive 32, such as a belt, a toothed belt, a chain or similar. In the illustrated embodiment, the continuous flexible loop drive 32 is connected to the first lift shaft portion 23 through a pulley 33.

The first lift shaft portion 23 is connected to the second lift shaft portion 24, which is described in more detail below. The first lift shaft 23 portion extends in a direction perpendicular to the direction of travel of the shuttle 16. The second lift shaft portion 24 extends in parallel to the first lift shaft portion 23 and is connected to the first and second arms 25, 26. The first and second arms 25, 26 are connected to the second lift shaft portion 24 and extend in opposite directions perpendicular to the second lift shaft portion 24. Hence, the first and second arms 25, 26 extend substantially in the direction of travel of the shuttle 16. The first arm 25 is connected to the first lift tube 29 through the first connection element 27, wherein the second arm 26 is connected to the second lift tube 30 through the second connection element 28. The first and second lift tubes 29, 30 extend perpendicular to the arms 25, 26 and in parallel to the first and second lift shaft portions 23, 24. For example, the first and second lift tubes 29, 30 are hollow, cylindrical and elongated and are, e.g. made of metal.

As seen particularly in Fig. 7 the wheels 20 are arranged on wheel shafts 34, 35. The shuttle comprises 16 at least two wheels shafts 34, 35, wherein a first set of wheels, such as a first and a second wheel 20, is arranged on opposite ends of a first wheel shaft 34, and a second set of wheels, such as a third and a fourth wheel 20, is arranged on a second wheel shaft 35. Alternatively, the shuttle 16 comprises four wheel shafts, one for each wheel 20. The wheel shafts 34, 35 extend in a direction perpendicular to the travel direction of the shuttle 16 and in parallel to the first and second lift shaft portions 23, 24 and to each other. Hence, the wheel shafts 34, 35 extend perpendicular to the first and second arms 25, 26. The first lift tube 29 is arranged around the first wheel shaft 34. For example, the first wheel shaft 34 extends through the first lift tube 29, wherein the first lift tube 29 at least partially encloses the first wheel shaft 34 in the radial direction. Similarly, the second lift tube 30 is arranged around the second wheel shaft 35, wherein the second wheel shaft 35 extends through the second lift tube 30. For example, the wheels shafts 34, 35 extend through the lift tubes 29, 30, so that they substantially are arranged inside the lift tubes 29, 30.

In the illustrated embodiment, the platform 21 is connected to the lift elements 31 through platform engaging elements 36. For example, the platform engaging elements 36 are arranged for engaging the platform 21. Optionally, the platform engaging elements 36 comprises or are provided with a load cell 40 for detecting a predetermined load on the platform 21 or for measuring the weight of the load on the platform 21. In the illustrated embodiment, the platform engaging elements 36 are also pivotally supported on the associated wheel shaft 34, 35 by means of a bearing and a support element 37.

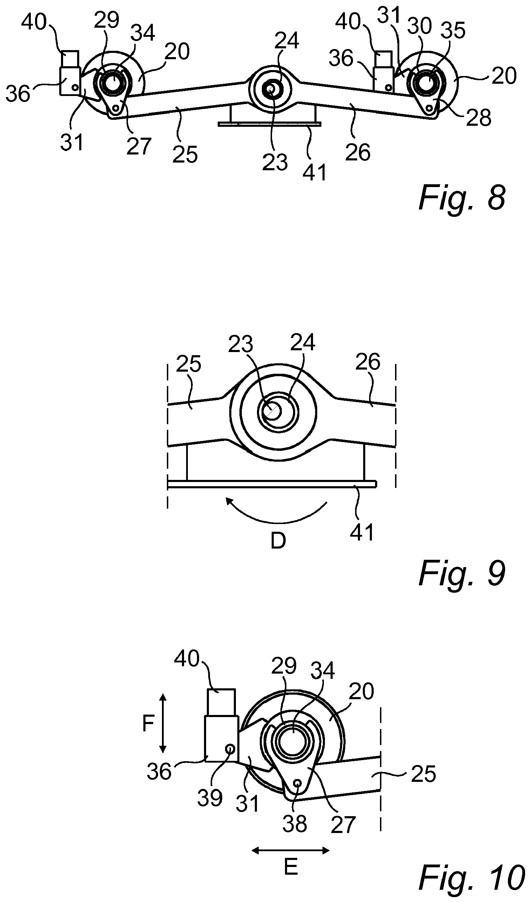

With reference to Figs. 8-10 parts of the shuttle 16 and its lifting mechanism are illustrated more in detail from the side. Fig. 8 is a section view along the line C-C in Fig. 7, wherein the motor 22, the loop drive 32 and the pulley 33 have been cut away and wherein the first lift shaft portion 23, the first lift tube 29 and the second lift tube 30 are showed in section. In Fig. 8 the support elements 37 have been removed to show the wheels 20 for increased clarity. Referring particularly to Figs. 8 and 9, the first lift shaft portion 23 is arranged to rotate around an axis of rotation of the first lift shaft portion 23 by means of the motor 22. For example, the axis of rotation of the first lift shaft portion 23 is its centre axis. For example, the position of the axis of rotation of the first lift shaft portion 23 is fixed. The second lift shaft portion 24 is connected to the first lift shaft portion 23, wherein the second lift shaft portion 24 is rotationally fixed to the first lift shaft portion 23 and rotates when the first lift shaft portion 23 is rotated. For example, the second lift shaft portion 24 rotates around the axis of rotation of the first lift shaft portion 23, so that the first and second lift shaft portions 23, 24 have the same axis of rotation. The second lift shaft 24 portion is arranged eccentric to the first lift shaft portion 23. Hence, the centre axis of the second lift shaft portion 24 is displaced in the radial direction to the centre axis of the first lift shaft portion 23. In the illustrated embodiment, the second lift shaft portion 24 is arranged with larger diameter than the first lift shaft portion 23. Alternatively, the first lift shaft portion 23 is arranged with larger diameter than the second lift shaft portion 24. The first and second arms 25, 26 are pivotally attached to the second lift shaft portion 24 and extend in opposite directions from the second lift shaft portion 24. The first and second arms 25, 26 extend substantially perpendicular from the second lift shaft portion 24 and are arranged perpendicular to the first lift shaft portion 23. In the illustrated embodiment, the first and second arms 25, 26 are elongated and, e.g. formed of plates, such as metal plates, arranged in a vertical plane. For example, a first end of the first and second arms 25, 26 is rotationally attached to the second lift shaft portion 24, e.g. through a bearing or other conventional means. The first and second arms 25,26 are pivotally connected to the second lift shaft portion 24, so that they are displaced in a direction perpendicular to the axis of rotation of the first and second lift shaft portions 23, 24, such as in the travel direction of the shuttle 16, when the second lift shaft portion 24 is rotated via the first lift shaft portion 23 by means of the motor 22. The rotation of the first and second lift shaft portions 23, 24, which is illustrated by means of the arrow D in Fig. 9, results in a displacement of the first and second arms 25, 26, which is illustrated by means of the arrow E in Fig. 10. Hence, by rotating the second lift shaft portion 24 eccentrically to the first lift shaft portion 23 the second lift shaft portion 24 pushes the first arm 25 and pulls the second arm 26, so that the first arm 25 is displaced substantially in the same direction as the second arm 26. For example, both the first and second arms 25, 26 are displaced perpendicular to the axis of rotation of the first lift shaft portion 23 in a direction towards one of the wheel shafts 34, 35, such as in the travel direction of the shuttle 16 towards a front or a back thereof. The shuttle 16 comprises a shaft holder 41 for holding the lift shaft with the first and second lift shaft portions 23, 24. For example, the shaft holder 41 is fixed to the chassis 19, wherein the axis of rotation of the lift shaft is fixed in relation to the chassis 19.

Referring particularly to Figs. 8 and 10 the first arm 25 is connected to the first connection element 27 through a rotating joint 38, such as a pivot, bearing or similar, wherein the first connection element 27 is pivotally connected to the first arm 25. In the illustrated embodiment, the first connection element 27 is basically connected to a second end of the first arm 25, i.e. the end opposite the first end which is connected to the second lift shaft portion 24. Fig. 10 illustrates a part of the first arm 26. However, the second arm 26 is connected to the second connection element 28 in a similar way.

The first connection element 27 is arranged for rotating the first lift tube 29. Hence, the first connection element 27 is rotationally fixed to the first lift tube 29 and extends radially therefrom. The first lift tube 29 is arranged around the first wheel shaft 34, such as concentric with the first wheel shaft 34. The first lift tube 29 is arranged pivotably in relation to the first wheel shaft 34, so that the first lift tube 29 is rotatable around the first wheel shaft 34. For example, the first lift tube 29 is spatially fixed to the chassis 19 by means of the support element 37, so that the axis of rotation of the first lift tube 29 is fixed in relation to the chassis 19. Hence, when the first arm 24 is displaced, as illustrated by the arrow E, the first connection element 27 is displaced accordingly at the rotating joint 38 to rotate the first connection element 29 around the rotating joint 38 and thus to rotate the first lift tube 29 around its axis of rotation. The axis of rotation of the rotating joint 38 is displaced in relation to the axis of rotation of the first lift tube 29 and is, e.g. arranged in parallel thereto. For example, the axis of rotation of the first lift tube 29 coincides with its centre axis. For example, the axis of rotation of the first lift tube 29 is fixed in relation to the axis of rotation of the first lift shaft portion 23. For example, the axis of rotation of the first lift tube 29 is fixed in relation to the axis of rotation of the first lift shaft portion 23. For example, the axis of rotation of the first lift tube 29 is fixed in relation to the axis of rotation of the first and second wheel shafts 34, 35 and to the chassis 19 of the shuttle 16. According to one embodiment, the axis of rotation of the first and second wheels shafts 34, 35, or all wheel shafts of the shuttle 16, are fixed in position in relation to each other and, e.g. in relation to the axis of rotation of the first lift shaft portion 23 and, e.g. in relation to the chassis 19. Fig. 10 illustrates a part of the first arm 26, the first connection element 27 and the first lift tube 29. However, the second arm 26, the second connection element 28 and the second lift tube 30 are arranged in a corresponding way to rotate the second lift tube 30 around the second wheel shaft 35.

The first and second lift tubes 29, 30 are provided with the lift elements 31. The lift elements 31 are rotationally or totally fixed to the first and second lift tubes 29, 30, wherein lift elements 31 rotate with the first and second lift tubes 29, 30 for lifting or lowering the at least one platform 21. Hence, the lift elements 31 extend radially from the surface of the first and second lift tubes 29, 30. For example, each lift element 31 is arranged as a plate, such as a metal plate, attached to the first lift tube 29 or the second lift tube 20, e.g. in a conventional manner such as by welding. In the illustrated embodiment, the at least one platform 21 is connected to each of the lift elements 31 through the platform engaging element 36, wherein the platform engaging elements 36 engage and carry the one or more platforms 21. The platform engaging elements 36 are connected to the lift elements 31 through a pivot joint 39, wherein the platform engaging elements 36 are displaced vertically, as illustrated by the arrow F in Fig. 10, when the lift elements 31 are rotated with the first and second lift tubes 29, 30. Of course, as the platform engaging elements 36 are connected to the lift elements 31 they will also be displaced horizontally when the lift elements 31 are rotated. Hence, the platform engaging elements 36 are pivotally connected to the lift elements 31 and carry the platform 21, wherein the platform is displaced corresponding to the platform engaging elements 36, i.e. at least vertically as illustrated by the arrow F. According to one embodiment, the platform 21 is displaced vertically, wherein the positions of the wheels 20 and the positions of the wheel shafts 34, 35 remain unaffected by the lifting and lowering operations. In Fig. 10 the support elements 37 have been removed to illustrate the wheels 20. For example, the platform engaging elements 36 are attached to the platform 21. In the illustrated embodiment, the platform engaging elements 36 comprise the load cell 40 for detecting a predetermined load on the platform 21 or for measuring a weight on said platform 21, such as measuring the weight of the pallet 12 and the goods 11 thereon, which can eliminate the requirement for additional weighing of the goods to be transported.

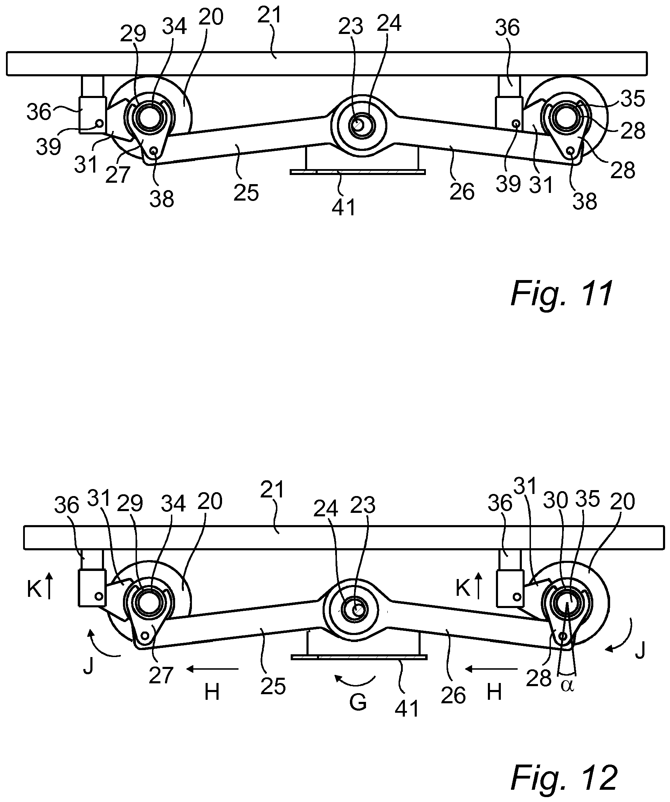

Referring to Figs. 11 and 12 a lifting and lowering operation is illustrated schematically according to one embodiment. In Figs. 11 and 12 the support elements 37 have been removed to illustrate the lifting and lowering operations more clearly in relation to the wheels 20 and a part of chassis 19 is illustrated schematically. In Fig. 11 the platform 21 is illustrated in the lowered position and in Fig. 12 the platform 21 is illustrated in the lifted position. To activate the lifting mechanism of the shuttle 16 to achieve a lifting operation, the motor 22 is driven to rotate the first lift shaft portion 23, which is illustrated by means of the arrow G in Fig. 12. In the illustrated example, the rotation of the first lift shaft portion 23 is clockwise. For example, the first lift shaft portion 23 is rotated 180 degrees to displace the platform 21 from a fully lowered position to a fully lifted position. The rotation of the first lift shaft portion 23 rotates the second lift shaft portion 24 in a corresponding manner. Hence, according to the illustrated example also the second lift shaft portion 24 is rotated 180 degrees around the axis of rotation of the first lift shaft portion 23 to move the platform 21 from the lowered position to the lifted position. The rotation of the eccentric second lift shaft portion 24 displaces the first and second arms 25, 26 substantially horizontally and in the same direction, which is illustrated by means of the arrows H in Fig. 12. The displacement of the first and second arms 25, 26 causes the first and second lift tubes 29, 30 to rotate through the first and second connection elements 27, 28, which is illustrated by means of the arrows J in Fig. 12. The first and second connection elements 27, 28 are rotated by the displacement of the first and second arms 25, 26 through the rotating joint 38 and the first and second connection elements 27, 28 being attached to the first and second lift tubes 29, 30. Hence, the first and second connection elements 27, 28 are rotated around the axis of rotation of the first and second lift tubes 29, 30 while bringing the first and second lift tubes 29, 30 along therewith. The first and second lift tubes 29, 30 are rotated in the same direction, such as clockwise. The lift elements 31 are rotated by rotating the first and second lift tubes 29, 30. For example, the lift elements 31 are rotated around the axis of rotation of the first and second lift tubes 29, 30. Hence, also the lift elements 31 are rotated in a direction illustrated by the arrows J in Fig. 12. The rotation of the lift elements 31 causes a displacement of the platform engaging elements 36 through the pivot joint 39, which is illustrated by means of the arrows K in Fig. 12. Hence, in a lifting operation the platform engaging elements 36 are pushed upwards for lifting the platform 21. For example, the platform 21 is displaced without altering the positions of the wheel shafts 34, 35. For example, the positions of the axes of rotation of the wheel shafts 34, 35 and the chassis 19 are fixed, also throughout the lifting and lowering operations. For example, the platform engaging elements 36 are displaced a distance in the vertical direction of not more than 30 mm, such as around 20 mm, wherein the platform 21 is lifted correspondingly. For example, the platform 21 is lifted 15-25 mm or around 20 mm from a fully lowered position to a fully lifted position, such as by rotation of the first lift shaft portion 23 180 degrees. The first and second lift tubes 29, 30 are rotated an angle α between the lifted and lowered positions as illustrated for the second lift tube 30 and the second connection element 28 in Fig. 12. For example, the angle α is 10-20 degrees, such as around 15 degrees, to displace the platform 21 around 20 mm. The rotation of the first and second lift tubes 29, 30 is mechanically synchronised by means of the structure of the lifting mechanism, as the first and second lift tubes 29, 30 are connected to the first and second arms 25, 26 through the first and second connection elements 27, 28. Hence, the rotational angles of the first and second lift tubes 29, 30 are synchronised and the rotational angle of the first lift tube 29 is always the same as the rotational angle of the second lift tube 30. According to one embodiment, the shuttle 16 comprises a blocking device (not illustrated) for blocking the lifting mechanism in the lifted position. For example, the blocking device is a mechanical blocking device.

A lowering operation is, e.g. performed by rotating the first lift shaft portion 23 further in the same direction, such as clockwise, wherein the first and second arms 25, 26 are displaced in the opposite direction as before, such as substantially horizontally in the opposite direction as the arrow H in Fig. 12. Alternatively, the first lift shaft portion 23 is rotated in the opposite direction, such as counter clockwise, which displaces the first and second arms 25, 26 in the horizontal direction in a similar way. The displacement of the first and second arms 25, 26 in the opposite direction as before causes the connection elements 27, 28, the first and second lift tubes 29, 30 and the lift elements 31 to rotate in the opposite direction as before, wherein the platform engaging elements 36 are lowered while bringing the platform 21 along therewith. For example, the platform 21 is displaced from the fully lifted position to the fully lowered position by rotating the first lift shaft portion 23 180 degrees, such as 180 degrees in the same direction as during the lifting operation.

## Claims

1. A shuttle (16) for delivering and retrieving goods (11) to and from a storage position in a rack storage system (10), wherein the shuttle (16) comprises a chassis (19), a motor, wheels (20), at least one vertically displaceable goods support platform (21), and a mechanism for lifting and lowering the platform (21), wherein the mechanism for lifting and lowering the platform comprises
a rotatable lift shaft having a first lift shaft portion (23) and a second lift shaft portion (24), wherein the first lift shaft portion (23) is connected to a motor (22) for driving the first lift shaft portion (23), and wherein the second lift shaft portion (24) is connected to the first lift shaft portion (23) and arranged eccentric thereto, and
first and second arms (25, 26) pivotably connected to the second lift shaft portion (24) and extending in opposite directions perpendicular to the second lift shaft portion (24),
**characterised in that**
the first arm (23) is pivotably connected to a first connection element (27), which first connection element (27) is rotationally fixed to a rotatable first lift tube (29) and extends radially therefrom, wherein the first lift tube (29) is pivotably arranged around a first wheel shaft (34),
the second arm (26) is pivotably connected to a second connection element (28), which second connection element (28) is rotationally fixed to a rotatable second lift tube (30) and extends radially therefrom, wherein the second lift tube (30) is pivotably arranged around a second wheel shaft (35), and
the first and second lift tubes (29, 30) are provided with radially extending lift elements (31), which lift elements (31) are rotationally fixed to the lift tubes (29, 30) and are connected to the platform (21) for lifting and lowering of the platform (21) in relation to the chassis (19) when the lift tubes (29, 30) are rotated.

2. A shuttle according to claim 1, wherein each of the lift tubes (29, 30) have a fixed axis of rotation and wherein each of the wheel shafts (34, 35) have a fixed axis of rotation.

3. A shuttle according to claim 1 or 2, wherein the first wheel shaft (34) is arranged inside the first lift tube (29), and wherein the second wheel shaft (35) is arranged inside the second lift tube (30).

4. A shuttle according to any of the preceding claims, wherein the platform (21) is connected to the lift elements (31) through platform engaging elements (36) pivotably connected to the lift elements (31).

5. A shuttle according to claim 4, wherein the platform (21) is fixed to the platform engaging elements (36).

6. A shuttle according to claim 4 or 5, wherein at least one of the platform engaging elements (36) is provided with a load cell (40).

7. A shuttle according to any of the preceding claims, wherein the lift elements (31) project in the same direction.

8. A shuttle according to any of the preceding claims, wherein the first lift tube (29) is provided with a first lift element (31) and a second lift element (31) spaced apart from each other, and wherein the second lift tube (30) is provided with a third lift element (31) and a fourth lift element (31) spaced apart from each other.

9. A rack storage system (10) having at least one pair of elongated rails (17) arranged in parallel, and a shuttle (16) according to any of the preceding claims movable on said pair of rails (17).

10. A rack storage system according to claim 9, comprising a plurality of storage positions distributed in rows in a horizontal plane, and comprising a plurality of such rows of storage positions distributed in a plurality of horizontal planes, wherein a pair of rails (17) is arranged below each of said rows of storage positions.

11. A rack storage system according to claim 9 or 10, including a forklift (18) for transporting a pallet (12) with goods (11) to and from the shuttle (16).

12. A method for lifting or lowering at least one platform (21) of a shuttle (16) for delivering and retrieving goods (11) to and from a storage position in a rack storage system (10), comprising the steps of
a) activating a motor (22) of the shuttle (16) for rotating a first lift shaft portion (23) eccentrically connected to a second lift shaft portion (24) of a lift shaft of the shuttle (16),
b) by rotation of the second lift shaft portion (24) around the axis of rotation of the first lift shaft portion (23), pushing a first arm (25) extending perpendicular from the second lift shaft portion (24) and being pivotably connected to the second lift shaft portion (24) while simultaneously pulling a second arm (26) extending from the second lift shaft portion (24) in a direction substantially opposite to the first arm (25) and being pivotably connected to the second lift shaft portion (24),
c) by pushing the first arm (25), rotating a first lift tube (29) around a first wheel shaft (34) of the shuttle (16) via a first connection element (27) pivotably connected to the first arm (25) and rotationally fixed to the first lift tube (29), and simultaneously, by pulling the second arm (26) rotating a second lift tube (30) around a second wheel shaft (35) of the shuttle (16) via a second connection element (28) pivotably connected to the second arm (26) and rotationally fixed to the second lift tube (30),
d) by rotating the first and second lift tubes (29, 30), rotating lift elements (31) being rotationally fixed to and radially extending from the first and second lift tubes (29, 30), and
e) by rotating the lift elements (31), lifting or lowering the at least one platform (21) in relation to a chassis (19) of the shuttle (16).

13. A method according to claim 12, comprising the steps of lifting or lowering the at least one platform (21) through platform engaging elements (36) pivotably connected to the lift elements (31).

14. A method for retrieving goods from a storage position in a rack storage system (10) comprising at least one row of storage positions, comprising the steps of
a) providing a shuttle (16) on a pair of rails (17) arranged below the row of storage positions,
b) driving the shuttle (16) along the rails (17) to a desired storage position, wherein said platform (21) is in a lowered position below the goods (11) to be retrieved,
c) activating a motor (22) of the shuttle (16) for rotating a first lift shaft portion (23) eccentrically connected to a second lift shaft portion (24) of a lift shaft of the shuttle (16),
d) by rotation of the second lift shaft portion (24) around the axis of rotation of the first lift shaft portion (23), pushing a first arm (25) extending perpendicular from the second lift shaft portion (24) and being pivotably connected to the second lift shaft portion (24) while simultaneously pulling a second arm (26) extending from the second lift shaft portion (24) in a direction substantially opposite to the first arm (25) and being pivotably connected to the second lift shaft portion (24),
e) by pushing the first arm (25), rotating a first lift tube (29) around a first wheel shaft (34) of the shuttle (16) via a first connection element (27) pivotably connected to the first arm (25) and rotationally fixed to the first lift tube (29), and simultaneously, by pulling the second arm (26) rotating a second lift tube (30) around a second wheel shaft (35) of the shuttle (16) via a second connection element (28) pivotably connected to the second arm (26) and rotationally fixed to the second lift tube (30),
f) by rotating the first and second lift tubes (29, 30), rotating lift elements (31) being rotationally fixed to and radially extending from the first and second lift tubes (29, 30),
g) by rotating the lift elements (31), lifting the at least one platform (21) in relation to a chassis (19) of the shuttle (16) and thereby lifting the goods (11) from the rack, and
h) driving the shuttle (16) with its platform (21) in a lifted position and the goods (11) thereon along the rails (17) to a forklift (18).
